(19) Europäisches Patentamt
European Patent Office
Office européen des brevets

(11) **EP 4 333 101 A1**

(12) **EUROPEAN PATENT APPLICATION**
published in accordance with Art. 153(4) EPC

(43) Date of publication:
**06.03.2024   Bulletin 2024/10**

(21) Application number: **22898989.3**

(22) Date of filing: **22.11.2022**

(51) International Patent Classification (IPC):
*H01M 4/13* (2010.01)       *H01M 4/131* (2010.01)
*H01M 4/134* (2010.01)      *H01M 4/62* (2006.01)
*H01M 10/42* (2006.01)      *H01M 4/139* (2010.01)
*H01M 4/04* (2006.01)       *H01M 10/052* (2010.01)

(52) Cooperative Patent Classification (CPC):
**H01M 4/04; H01M 4/13; H01M 4/131; H01M 4/134; H01M 4/139; H01M 4/62; H01M 10/052; H01M 10/42; Y02E 60/10; Y02P 70/50**

(86) International application number:
**PCT/KR2022/018510**

(87) International publication number:
**WO 2023/096307 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **29.11.2021   KR 20210167502**

(71) Applicant: **LG Energy Solution, Ltd.**
**Seoul 07335 (KR)**

(72) Inventors:
• **JEON, Seoyoung**
  **Daejeon 34122 (KR)**

• **KIM, Sarah**
  **Daejeon 34122 (KR)**
• **LEE, Ilha**
  **Daejeon 34122 (KR)**
• **JOO, Mun Kyu**
  **Daejeon 34122 (KR)**
• **KWON, Yohan**
  **Daejeon 34122 (KR)**
• **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

(54)   **ANODE FOR LITHIUM SECONDARY BATTERY, METHOD FOR MANUFACTURING LITHIUM SECONDARY BATTERY, AND LITHIUM SECONDARY BATTERY**

(57)   The present application relates to a negative electrode for a lithium secondary battery, a method for manufacturing a lithium secondary battery, and a lithium secondary battery.

[Figure 1]

**Description**

[Technical Field]

This application claims priority to and the benefit of Korean Patent Application No. 10-2021-0167502 filed in the Korean Intellectual Property Office on November 29, 2021, the entire contents of which are incorporated herein by reference.

The present application relates to a negative electrode for a lithium secondary battery, a method for manufacturing a lithium secondary battery, and a lithium secondary battery.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte solution, and a separator. The negative electrode includes a negative electrode active material for intercalating and de-intercalating lithium ions from the positive electrode, and as the negative electrode active material, a silicon-containing particle having high discharge capacity may be used.

In general, a carbon material such as graphite is used in a negative electrode of a lithium secondary battery, but a theoretical capacity density of carbon is 372 mAh/g (833 mAh/cm$^3$). Therefore, in order to improve the energy density of the negative electrode, silicon (Si), tin (Sn) or the like alloyed with lithium, oxides and alloys thereof and the like are being considered as negative electrode materials. Among them, silicon-containing materials have attracted attention due to their low cost and high capacity (4200 mAh/g).

However, silicon undergoes a volume change (contraction or expansion) during the intercalation/de-intercalation process of lithium ions, resulting in deterioration of mechanical stability and, as a result, there is a problem in that cycle characteristics are impaired. Therefore, there is a need for developing a material, which is excellent in stability when used as an active material of an electrochemical device, and capable of securing cycle characteristics by having structural stability.

Further, when a silicon-containing negative electrode active material is used, there occurs a problem in that the initial irreversible capacity is large. In the charging/discharging reaction of a lithium secondary battery, lithium released from the positive electrode is intercalated into the negative electrode during charging, and de-intercalated from the negative electrode and returned to the positive electrode during discharging, and in the case of a silicon-containing negative electrode active material, volume change and surface side reactions are severe, so that a large amount of the lithium intercalated into the negative electrode during the initial charging cannot return to the positive electrode, and accordingly, there occurs a problem in that the initial irreversible capacity becomes large. When the initial irreversible capacity increases, there occurs a problem in that the battery capacity and the cycle are rapidly reduced.

In order to solve the aforementioned problems, a method of pre-lithiating a silicon negative electrode including a silicon-containing negative electrode active material is known. As a pre-lithiation method, a method of lithiating a negative electrode active material by a physical/chemical method such as electroplating, lithium metal transfer, and lithium metal deposition and then manufacturing an electrode, a method of electrochemically pre-lithiating a negative electrode, and the like are known.

The existing physicochemical method involves risks such as fire and explosion due to environmental factors in which the method needs be carried out at a high temperature, and the existing electrochemical method has a problem in that the initial irreversible capacity cannot be uniformly controlled and production costs are increasing.

In particular, in a lithium metal transfer process, it is difficult to safely and easily transfer lithium metal, and even though lithium metal is transferred, the highly reactive lithium metal immediately begins to react with the negative electrode active material, causing problems such as particle cracking on the surface of the negative electrode active material layer.

Therefore, there is a need for research into processes and materials that are safer, more efficient, and capable of uniformly pre-lithiating lithium in a negative electrode active material layer in pre-lithiating a negative electrode.

<Related Art Documents>

(Patent Document 1) Japanese Patent Application Laid-Open No. 2009-080971

[Detailed Description of the Invention]

[Technical Problem]

After confirming the existence of the above-described problems, it could be seen that lithium metal may be safely and easily transferred in a lithiation process including a transfer process, and the aforementioned problems can be solved when a layer with a specific composition and thickness is laminated on the negative electrode active material layer in order to prevent the lithium metal and the negative electrode active material layer from beginning to react immediately after the transfer.

Accordingly, the present application relates to a negative electrode for a lithium secondary battery, a method for manufacturing a lithium secondary battery, and a lithium secondary battery.

[Technical Solution]

An exemplary embodiment of the present specification provides a negative electrode for a lithium secondary battery, including: a negative electrode current collector layer; a negative electrode active material layer on one surface or both surfaces of the negative electrode current collector layer; and an electrolyte solution dissolution layer on a surface of the negative electrode active material layer opposite to a surface of the negative electrode active material layer facing the negative electrode current collector layer, in which the electrolyte solution dissolution layer has a thickness of 0.1 um or more and 5 um or less, and the electrolyte solution dissolution layer includes a binder copolymer including a monomer unit including a fluoro group, and the monomer unit is present in an amount of 5 parts by weight or more and 20 parts by weight or less based on 100 parts by weight of the binder copolymer.

Another exemplary embodiment provides a method for manufacturing a lithium secondary battery, the method including: forming a negative electrode current collector layer and a negative electrode active material layer on one surface or both surfaces of the negative electrode current collector layer; forming an electrolyte solution dissolution layer by coating a surface of the negative electrode active material layer opposite to a surface of the negative electrode active material layer facing the negative electrode current collector layer with an electrolyte solution dissolution layer composition to form a negative electrode for the lithium secondary battery; transferring lithium metal to a surface of the electrolyte solution dissolution layer opposite to a surface of the electrolyte solution dissolution layer facing the negative electrode active material layer; forming a positive electrode current collector layer and a positive electrode active material layer on one surface or both surfaces of the positive electrode current collector layer to form a positive electrode for a lithium secondary battery; laminating a separator between the negative electrode and the positive electrode and placing the resulting laminate in a battery pouch; and pre-lithiating the negative electrode by introducing an electrolyte solution into the battery pouch.

Finally, an exemplary embodiment of the present application provides a lithium secondary battery manufactured by the method for manufacturing a lithium secondary battery according to the present application.

[Advantageous Effects]

A negative electrode for a lithium secondary battery according to an exemplary embodiment of the present invention includes an electrolyte solution dissolution layer having a thickness of 0.1 um or more and 5 um or less and including a binder copolymer including a monomer including a fluoro group on a negative electrode active material layer, in which the monomer is included in an amount of 5 parts by weight or more and 20 parts by weight or less based on 100 parts by weight of the binder copolymer. Even though lithium metal is transferred onto the a negative electrode active material layer by including the electrolyte solution dissolution layer as described above, pre-lithiation does not occur, and the negative electrode for a lithium secondary battery according to an exemplary embodiment of the present invention has a feature that in a state where an electrolyte solution is injected and sealed after a battery is afterward assembled, the electrolyte solution dissolution layer is dissolved in the electrolyte solution and pre-lithiated.

As the electrolyte solution dissolution layer is dissolved in the electrolyte solution and pre-lithiated, products of side reactions with lithium are reduced compared to the case where both a negative electrode is manufactured and pre-lithiation occurs, so that the loss of lithium metal can be reduced, and the electrolyte solution dissolution layer can also adjust the rate of pre-lithiation, so that the negative electrode for a lithium secondary battery according to an exemplary embodiment of the present invention has a feature capable of preventing the loss of lithium and achieving uniform pre-lithiation over the entire negative electrode active material layer.

That is, the negative electrode for a lithium secondary battery according to the present invention has a main feature in which an electrolyte solution dissolution layer having a specific composition and thickness is provided on a negative electrode active material layer such that pre-lithiation can be uniformly achieved over the entire negative electrode active material layer more efficiently and without the loss of lithium during the pre-lithiation process.

[Brief Description of Drawings]

FIG. 1 is a view illustrating the process of transferring lithium metal to a negative electrode for a lithium secondary battery according to an exemplary embodiment of the present application.
FIG. 2 is a view illustrating the stacking structure of a lithium secondary battery according to an exemplary embodiment of the present application.

<Explanation of Reference Numerals and Symbols>

| | |
|---|---|
| 10: | Substrate layer |
| 20: | Lithium metal |
| 30: | Negative electrode active material layer |
| 35: | Electrolyte solution dissolution layer |
| 40: | Negative electrode current collector layer |
| 50: | Separator |
| 60: | Positive electrode current collector layer |
| 70: | Positive electrode active material layer |
| 100: | Transfer laminate |
| 200: | Negative electrode for lithium secondary battery |
| 300: | Positive electrode for lithium secondary battery |

[Best Mode]

Prior to the description of the present invention, some terms will be first defined.
When one part "includes" one constituent element in the present specification, unless otherwise specifically described, this does not mean that another constituent element is excluded, but means that another constituent element may be further included.
In the present specification, 'p to q' means a range of 'p or more and q or less'.
In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.
In the present specification, "Dn" means the average particle diameter, and means the particle diameter at the n% point of the cumulative distribution of the number of particles according to the particle diameter. That is, D50 is the particle diameter at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.
In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.
In the present specification, the 'polymer' is understood to be used in a broad sense, including a copolymer, unless otherwise specified as a 'homopolymer'.
In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode for a lithium secondary battery, including: a negative electrode current collector layer; a negative electrode active material layer formed on one surface or both surfaces of the negative electrode current collector layer; and an electrolyte solution dissolution layer provided on a surface opposite to a surface of the negative electrode active material layer brought into contact with the negative electrode current collector layer, in which the electrolyte solution dissolution layer has a thickness of 0.1 um or more and 5 um or less, and the electrolyte solution dissolution layer includes a binder copolymer including a monomer including a fluoro group, and includes the monomer in an amount of 5 parts by weight or more and 20 parts by weight or less based on 100 parts by weight of the binder copolymer.

The negative electrode for a lithium secondary battery according to the present invention has a main feature in which an electrolyte solution dissolution layer having a specific composition and thickness is provided on a negative electrode active material layer such that pre-lithiation can be uniformly achieved over the entire negative electrode active material layer more efficiently and without the loss of lithium during the pre-lithiation process.

Hereinafter, specific contents of the negative electrode for a lithium secondary battery of the present invention will be described.

In an exemplary embodiment of the present application, the negative electrode current collector layer generally has a thickness of 1 um to 100 um. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, the negative electrode current collector layer has a thickness of 1 um or more and 100 um or less, and the negative electrode active material layer may have a thickness of 20 um or more and 500 um or less.

However, the thickness may be variously modified depending on the type and use of the negative electrode used, and is not limited thereto.

In an exemplary embodiment of the present application, the negative electrode active material layer may include a silicon-containing active material; a negative electrode conductive material; and a negative electrode binder.

The fact that the negative electrode active material layer includes a silicon-containing active material; a negative electrode conductive material; and a negative electrode binder may include a negative electrode active material layer composition including a silicon-containing active material; a negative electrode conductive material; and a negative electrode binder.

In an exemplary embodiment of the present application, the silicon-containing active material may include one or more selected from the group consisting of $SiO_x$, wherein x=0, $SiO_x$, wherein 0<x<2, SiC, a metal impurity, and a Si alloy.

In an exemplary embodiment of the present application, the silicon-containing active material includes one or more selected from the group consisting of $SiO_x$, wherein x=0, and $SiO_x$, wherein 0<x<2, SiC, and may include 70 parts by weight or more of the $SiO_x$, wherein x=0 based on 100 parts by weight of the silicon-containing active material.

In another exemplary embodiment, the $SiO_x$ (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-containing active material.

In an exemplary embodiment of the present application, the silicon-containing active material may include a metal impurity, which is an impurity that may be generated during the purification process of the silicon-containing active material, and the content thereof may be 0.1 parts by weight or less based on 100 parts by weight of the silicon-containing active material.

In an exemplary embodiment of the present application, for the silicon-containing active material, particularly, pure silicon (Si) may be used as the silicon-containing active material. The use of pure silicon (Si) as the silicon-containing active material may mean that based on the total 100 parts by weight of the silicon-containing active material as described above, pure Si particles ($SiO_x$ (x=0)), which are not bound to other particles or elements, are included in the above range.

Since the silicon-containing active material has a remarkably high capacity compared to a graphite-based active material used in the related art, attempts to apply the silicon-containing active material are increasing, but the attempt is limited to a case where a small amount of the silicon-containing active material is mixed with the graphite-based active material and used, and the like because the silicon-containing active material has a high volume expansion rate in the charging and discharging process.

Therefore, the present invention has solved the existing problems by enhancing the roles of the conductive material and the binder in order to solve the aforementioned problems while using only the silicon-containing active material as a negative electrode active material in order to improve the capacity performance.

Meanwhile, the silicon-containing active material of the present invention may have an average particle diameter (D50) of 5 um to 10 um, specifically 5.5 um to 8 $\mu$m, and more specifically 6 um to 7 um. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-containing active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the heterogeneous phenomenon of the current density during charging and discharging.

In an exemplary embodiment of the present application, the silicon-containing active material generally has a characteristic BET surface area. The BET surface area of the silicon-containing active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured by DIN 66131 (using nitrogen).

In an exemplary embodiment of the present application, the silicon-containing active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, the silicon-containing active material may be present in an amount of 60 parts by weight or more based on 100 parts by weight of the negative electrode active material layer composition.

In another exemplary embodiment, the silicon-containing active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode active material layer composition.

The negative electrode active material layer composition according to the present application has a feature in which by using a conductive material and a binder, which can suppress the volume expansion rate in the charging and discharging process even though a silicon-containing active material having a remarkably high capacity is used in the above range, the performance of the negative electrode does not deteriorate and output characteristics at charging and discharging are excellent even though the above range is included.

In an exemplary embodiment of the present application, the silicon-containing active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line.

$$[\text{Equation 1}]$$

$$4\pi A/P^2$$

In the related art, it was common to use only a graphite-based compound as a negative electrode active material, but recently, as the demand for a high-capacity battery has increased, attempts to mix and use a silicon-containing compound have been increased in order to increase the capacity. However, in the case of the silicon-containing compound, there is a limitation in that the volume rapidly expands in the process of charging/discharging to impair the conductive path formed in the negative electrode active material layer, consequently resulting in deterioration in the performance of the battery.

Accordingly, in an exemplary embodiment of the present application, the negative electrode conductive material may include one or more selected from the group consisting of a dotted conductive material; a linear conductive material;

and a planar conductive material.

In an exemplary embodiment of the present application, the dotted conductive material may be used to enhance the conductivity of the negative electrode, and is preferably a conductive material having conductivity without inducing a chemical change. Specifically, the conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 um to 7 um, specifically 3 um to 6 $\mu$m, and more specifically 4 um to 5 um. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, the planar conductive material provides a negative electrode composition having a D10 of 0.5 um or more and 1.5 um or less, a D50 of 2.5 um or more and 3.5 um or less, and a D90 of 7.0 um or more and 15.0 um or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 1 $m^2$/g or more.

In another exemplary embodiment, the planar conductive material may have a BET specific surface area of 1 $m^2$/g or more and 500 $m^2$/g or less, preferably 5 $m^2$/g or more and 300 $m^2$/g or less, and more preferably 5 $m^2$/g or more and 250 $m^2$/g or less.

In still another exemplary embodiment, the planar conductive material is a high specific surface area planar conductive material, and the BET specific surface area may satisfy a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In yet another exemplary embodiment, the planar conductive material is a low specific surface area planar conductive material, and the BET specific surface area may satisfy a range of 1 $m^2$/g or more and 40 $m^2$/g or less, preferably 5 $m^2$/g or more and 30 $m^2$/g or less, and more preferably 5 $m^2$/g or more and 25 $m^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in an alignment where longitudinal axes of the carbon nanotube units are substantially the same. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the negative electrode conductive material may be present in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, based on 100 parts by weight of the negative electrode active material layer composition.

The negative electrode conductive material according to the present application has a completely different configuration from a positive electrode conductive material applied to the positive electrode. That is, the negative electrode conductive material according to the present application serves to capture a contact point between silicon-containing active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the negative electrode conductive material according to the present application is applied to a silicon-containing active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-containing active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 $m^2$/g or more and 4.5 $m^2$/g or less. In addition, plate-like graphite, which is a planar conductive material, is in a planar form, and may have a BET specific surface area of 5 $m^2$/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-containing active material, and when the above role is satisfied, all general binders can be applied, specifically, a water-based binder can be used, and more specifically, a PAM-based binder can be used. A thickener may be included with the binder, and CMC may be specifically used as the thickener. In an exemplary embodiment of the present application, the electrolyte solution dissolution layer means a coating layer having a property to be dissolved in an electrolyte solution, and may be expressed as a coating layer including an electrolyte solution dissolution layer composition.

The electrolyte solution dissolution layer is not immediately subjected to pre-lithiation even though lithium metal is transferred onto the negative electrode in the negative electrode manufacturing process in pre-lithiating the negative electrode according to the present invention, and may reduce the loss of lithium by performing a process of pre-lithiating the negative electrode after a battery is afterward assembled, and then injecting the electrolyte solution.

In an exemplary embodiment of the present application, the thickness of the electrolyte solution dissolution layer may satisfy a range of 0.1 um or more and 5 um or less.

In another exemplary embodiment, the thickness of the electrolyte solution dissolution layer may satisfy a range of 0.1 um or more and 5 um or less, preferably 0.2 um or more and 3 um or less, preferably 0.2 um or more and 2 um or less, more preferably 0.2 um or more and 1 um or less, and most preferably 0.2 um or more and 0.5 um or less.

The electrolyte solution dissolution layer according to the present application has a feature in which the loss of lithium may be minimized by having the above thickness range, and lithium may be uniformly pre-lithiated in the negative electrode active material layer. That is, when the thickness of the electrolyte solution dissolution layer exceeds the above range, as the rate at which the electrolyte solution dissolution layer is dissolved in the electrolyte solution and disappears is remarkably reduced, the lithium metal is not uniformly pre-lithiated in the negative electrode active material layer during that time, but instead, the lithium metal is dissolved in the electrolyte solution, resulting in an increase in lithium loss. In addition, when the thickness is less than the above range, the electrolyte solution dissolution layer is pre-lithiated on the negative electrode active material layer before being impregnated with the electrolyte solution, so that there may occur phenomena such as the generation of by-products due to the rapid reaction between the lithium metal and the negative electrode and cracking of the negative electrode active material on the surface of the negative electrode active material layer.

In an exemplary embodiment of the present application, the electrolyte solution dissolution layer may include a binder copolymer including a monomer including a fluoro group.

The fact that the electrolyte solution dissolution layer includes a binder copolymer including a monomer including a fluoro group may have the same meaning as including an electrolyte solution dissolution layer composition including a binder copolymer including a monomer including a fluoro group.

In an exemplary embodiment of the present application, the weight average molecular weight of the binder copolymer may satisfy a range of 1,000 g/mol or more and 10,000,000 g/mol or less. Specifically, the weight average molecular weight of the binder copolymer may satisfy a range of 10,000 g/mol or more and 5,000,000 g/mol or less.

In an exemplary embodiment of the present application, the binder copolymer may include various copolymers of one or more selected from the group consisting of polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene butadiene rubber (SBR), fluorine rubber, and polyacrylic acid.

In this case, an exemplary embodiment of the present application is characterized in that the binder copolymer includes a monomer including a fluoro group.

In an exemplary embodiment of the present application, the fact that the binder copolymer includes a monomer including a fluoro group may mean that the monomer units containing a fluoro group may be included in the copolymer as monomer units in a random, alternating or block form.

In an exemplary embodiment of the present application, provided is a negative electrode for a lithium secondary battery, in which the monomer includes a perfluoro olefin.

The monomer including a fluoro group may include a C2-C8 fluoroolefin or a perfluoroolefin, such as tetrafluoroethylene (TFE), hexafluoropropylene (HFP), pentafluoropropylene and hexafluoroisobutylene.

Specifically, in an exemplary embodiment of the present application, the monomer including a fluoro group may be hexafluoropropylene (HFP).

In particular, the binder copolymer according to the present application may include the monomer in an amount of 5 parts by weight or more and 20 parts by weight or less based on 100 parts by weight of the binder copolymer.

In another exemplary embodiment, the binder copolymer may include the monomer in an amount of 5 parts by weight or more and 20 parts by weight or less, preferably 8 parts by weight or more and 15 parts by weight or less based on 100 parts by weight of the binder copolymer.

The fact that the monomer is included in the content based on the binder copolymer may mean the content part of the monomer based on the entire binder copolymer formed by allowing two or more monomers to react with each other.

As the electrolyte solution dissolution layer according to the present application has the composition, the electrolyte solution dissolution layer has a feature capable of suppressing the generation of side reaction and preventing the cracking of negative electrode active material particles because the pre-lithiation rate of lithium metal is appropriate when pre-lithiation is afterward performed. That is, when the monomer has a range of less than the above content, side reactions occur frequently on the surface of the active material layer while the pre-lithiation rate is remarkably increased, so that lithium loss is increased, and when the above content is exceeded, the surface of the electrolyte solution dissolution layer becomes an unstable state (brittle), and accordingly, the movement rate of lithium during pre-lithiation deteriorates, and accordingly, the loss of lithium may be increased.

In an exemplary embodiment of the present application, the binder copolymer may be a polyvinylidenefluoride-hexafluoropropylene copolymer (PVDF-co-HFP) .

In an exemplary embodiment of the present application, provided is a negative electrode for a lithium secondary battery, in which the electrolyte solution dissolution layer further includes an acrylic polymer, and includes the binder copolymer in an amount of 1 part by weight or more and 20 parts by weight or less based on 100 parts by weight of the electrolyte solution dissolution layer.

In an exemplary embodiment of the present application, the acrylic polymer is an acrylic polymer that can be dissolved in an electrolyte solution, and may include one or more polymers selected from the group consisting of polymethylmethacrylate (PMMA); polycarbonate; and polystyrene.

In particular, the acrylic polymer according to the present application may include a polymer having a property, which is insoluble in water and readily soluble in the included electrolyte solution.

In an exemplary embodiment of the present application, provided is a method for manufacturing a lithium secondary battery, the method including: forming a negative electrode current collector layer and a negative electrode active material layer on one surface or both surfaces of the negative electrode current collector layer; forming a negative electrode for a lithium secondary battery, including an electrolyte solution dissolution layer by coating a surface opposite to a surface of the negative electrode active material layer brought into contact with the negative electrode current collector layer with an electrolyte solution dissolution layer composition; transferring lithium metal to a surface opposite to a surface of the electrolyte solution dissolution layer brought into contact with the negative electrode active material layer; forming a positive electrode for a lithium secondary battery by forming a positive electrode current collector layer and a positive electrode active material layer on one surface or both surfaces of the positive electrode current collector layer; including and laminating a separator between the negative electrode and the positive electrode and including the resulting laminate in a battery pouch; and pre-lithiating the negative electrode by introducing an electrolyte solution into the battery pouch.

In an exemplary embodiment of the present application, provided is a step of forming a negative electrode current collector layer and a negative electrode active material layer on one surface or both surfaces of the negative electrode current collector layer.

The above step is a process of laminating a lithium secondary battery, the forming of the negative electrode current collector layer and the negative electrode active material layer on one surface or both surfaces of the negative electrode current collector layer includes coating one surface or both surfaces of the negative electrode current collector layer with a negative electrode slurry including a negative electrode active material layer composition, and the negative electrode active material layer composition may include one or more selected from the group consisting of a silicon-containing active material; a negative electrode conductive material; and a negative electrode binder.

In this case, the above-described content may be applied to the content on the silicon-containing active material, the negative electrode conductive material, and the negative electrode binder.

In an exemplary embodiment of the present application, the negative electrode slurry may include a negative electrode active material layer composition; and a slurry solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode active material layer composition included in the negative electrode slurry, and may mean the content of the negative electrode active material layer composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode active material layer composition because the viscosity is suitable during the formation of the negative electrode active material layer.

In an exemplary embodiment of the present application, the slurry solvent is not limited thereto as long as the solvent can dissolve the negative electrode active material layer composition, but specifically, distilled water may be used.

The negative electrode according to an exemplary embodiment of the present application may be formed by coating and drying the negative electrode slurry on the negative electrode current collector layer.

A slurry solvent in the negative electrode slurry may be dried by the drying step.

In an exemplary embodiment of the present application, it is possible to include forming a negative electrode for a lithium secondary battery, including an electrolyte solution dissolution layer by coating a surface opposite to a surface of the negative electrode active material layer brought into contact with the negative electrode current collector layer with an electrolyte solution dissolution layer composition.

A coating method generally used in the art may be used for the coating of the electrolyte solution dissolution layer, and for example, the coating method may be a method selected from the group consisting of dip coating, spray coating, spin coating, die coating, gravure coating, micro-gravure coating, comma coating and roll coating, but is not limited thereto.

In an exemplary embodiment of the present application, it is possible to include a process of the surface with the electrolyte solution dissolution layer composition, and then vacuum-drying the coated composition at a temperature of 100°C to 150°C for 5 hours to 10 hours, and an electrolyte solution dissolution layer is formed by the process.

In an exemplary embodiment of the present application, it is possible to include transferring lithium metal to a surface opposite to a surface of the electrolyte solution dissolution layer brought into contact with the negative electrode active material layer.

In general, the pre-lithiation process is to chemically or physically pre-lithiate lithium metal on the negative electrode, and specifically, a lithium metal transfer process, a lithium metal powder deposition, an electro/chemical process, or a lithium metal deposition process may be performed in this order, and the pre-lithiation process according to the present application may include a lithium metal transfer process.

In the case of the lithium metal transfer process, lithium metal, which is highly reactive, may be more stably transferred onto the negative electrode active material layer. In this case, a process capable of easily transferring lithium metal from a transfer laminate onto the negative electrode active material layer is required, and the method also has a feature capable of enhancing the efficiency of the transfer process as the electrolyte solution dissolution layer is formed on the negative electrode active material layer according to the present application.

In an exemplary embodiment of the present application, provided is a method for manufacturing a lithium secondary battery, in which the transferring of the lithium metal to the surface of the electrolyte solution dissolution layer opposite to the surface of the electrolyte solution dissolution layer facing the negative electrode active material layer includes preparing a transfer laminate including a substrate layer and lithium metal provided on the substrate layer; laminating the transfer laminate on the electrolyte solution dissolution layer such that a surface opposite to a surface of the lithium metal facing the substrate layer faces a surface opposite to a surface of the electrolyte solution dissolution layer facing the negative electrode active material layer; and removing the substrate layer.

In an exemplary embodiment of the present application, a deposition method for depositing the lithium metal on the substrate layer, may be selected among an evaporation deposition method, a chemical deposition method, chemical vapor deposition (CVD), and a physical vapor deposition, but the method is not limited thereto, and various deposition methods used in the art may be used.

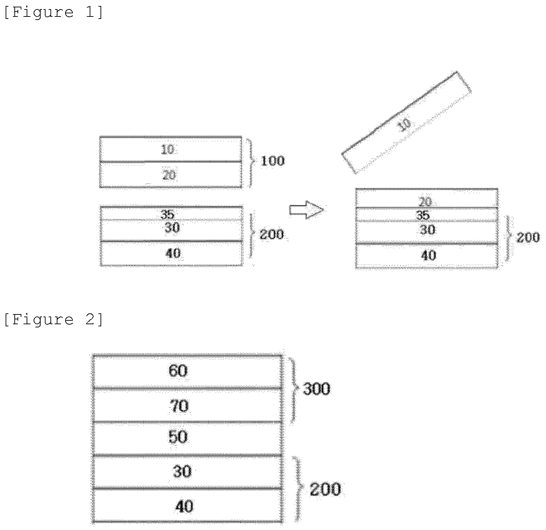

FIG. 1 is a view illustrating a method for pre-lithiating a negative electrode for a lithium secondary battery according to an exemplary embodiment of the present application. Specifically, FIG. 1 illustrates a process of preparing a transfer laminate 100 including a substrate layer 10 and lithium metal 20, laminating the transfer laminate 100, such that a negative electrode active material layer 30 is formed on a negative electrode current collector layer 40 and an electrolyte solution dissolution layer 35 of a negative electrode 200 for a lithium secondary battery wherein the electrolyte solution dissolution layer 35 is formed on the negative electrode active material layer 30 is brought into contact with the lithium metal 20, and then transferring only the lithium metal 20 onto the electrolyte solution dissolution layer 35 by removing the substrate layer 10.

In this case, a transfer process may be performed through roll pressing by applying a load of 10 kgf to 500 kgf to the negative electrode for a lithium secondary battery on which the transfer laminate is laminated. Thereafter, a process of removing the substrate layer is included, and as the electrolyte solution dissolution layer according to the present application is included during the removal of the substrate layer, the method may prevent direct contact with the silicon-containing active material, and thus has a feature in which lithium metal is easily transferred.

The reason for this is that when there is no electrolyte solution dissolution layer as in the existing method, the lithium metal is brought into direct contact with the top of the negative electrode active material layer, and thus, a large number of by-products such as Li nitride are generated, and thus, are not easily transferred to the negative electrode active material layer, and accordingly, the de-intercalation of lithium metal occurred, but the above problem was solved by including a metal layer satisfying the thickness and composition according to the present application.

In an exemplary embodiment of the present application, the substrate layer can be used without limitation as long as the substrate layer has a feature capable of withstanding process conditions such as high temperature in the depositing of the lithium metal and capable of preventing a reverse delamination problem in which the lithium metal is transferred onto the substrate layer during a winding process for transferring the deposited lithium metal.

Specifically, in an exemplary embodiment of the present application, the substrate layer may be one or more selected from the group consisting of polyethylene terephthalate (PET), polyimide (PI), poly(methylmethacrylate) (PMMA), polypropylene, polyethylene and polycarbonate.

In an exemplary embodiment of the present application, the thickness of the substrate layer may be 1 um or more and 300 um or less, and satisfy a range of 5 um or more and 200 um or less, and 10 um or more and 100 um or less.

In an exemplary embodiment of the present application, the thickness of the lithium metal may be 1 um or more and 10 um or less, and may preferably satisfy 3 um or more and 10 um or less.

When the thicknesses of the substrate layer and the lithium metal satisfy the above ranges, the method has a feature capable of allowing the lithium metal to be efficiently transferred to the negative electrode active material layer side, and capable of preventing the reverse transfer.

In an exemplary embodiment of the present application, in order to improve the peelability of lithium metal and secure transferability to the negative electrode active material layer, a release layer may be further included on the surface of the substrate layer which is in contact with the lithium metal of the transfer laminate.

That is, the substrate layer may have a release layer formed on at least one surface thereof, and may have a release layer formed on both surfaces thereof. It is possible to prevent the reverse delamination problem in which the lithium metal is transferred onto the substrate layer during the winding process for transferring the deposited lithium metal to the negative electrode due to the release layer, and in addition, the substrate layer may be easily separated after the lithium metal is transferred onto the negative electrode active material layer.

The release layer may include one or more selected from the group consisting of a silicone-modified polyester in which a silicone chain is graft-bonded to a polyester main chain, Si, melamine and fluorine.

In an exemplary embodiment of the present application, the release layer may be formed by a coating method, and for example, the coating method may be a method selected from the group consisting of dip coating, spray coating, spin coating, die coating, gravure coating, micro-gravure coating, comma coating and roll coating, but is not limited thereto, and various coating methods that can be used to form a coating layer in the art may be used.

In an exemplary embodiment of the present application, even after the transferring of the lithium metal by laminating the lithium metal onto the metal layer, it is possible to delay the progress of the pre-lithiation process by preventing the electrolyte solution dissolution layer from being brought into direct contact with the negative electrode active material layer.

In an exemplary embodiment of the present application, it is possible to include forming a positive electrode for a lithium secondary battery by forming a positive electrode current collector layer and a positive electrode active material layer on one surface or both surfaces of the positive electrode current collector layer; and including and laminating a separator between the negative electrode and the positive electrode and including the resulting laminate in a battery pouch.

The positive electrode may include a positive electrode current collector layer and a positive electrode active material layer formed on the positive electrode current collector layer and including the positive electrode active material.

In the positive electrode, the positive electrode current collector layer is not particularly limited as long as the positive electrode current collector layer has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Alternatively, the positive electrode current collector layer may typically have a thickness of 3 um to 500 um, and the adhesion of the positive electrode active material may also be enhanced by forming irregularities on the surface of the positive electrode current collector layer. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 um or more.

For example, the single particles may have an average particle diameter (D50) of 1 um or more and 12 um or less, 1 um or more and 8 um or less, 1 um or more and 6 um or less, more than 1 um and 12 um or less, more than 1 um and 8 um or less, or more than 1 um and 6 um or less.

Even though the single particles are formed as small particle diameters having an average particle diameter (D50) of 1 um or more and 12 um or less, the particle strength may be excellent. For example, the single particles may have a particle strength of 100 to 300 MPa when rolled with a force of 650 kgf/cm$^2$. As a result, even though the single particles are rolled with a strong force of 650 kgf/cm$^2$, a phenomenon in which the number of particulates in the electrode due to cracking of the particles is increased is alleviated, thereby improving the service life characteristics of the battery.

The single particles may be prepared by mixing a transition metal precursor and a lithium raw material and firing the resulting mixture. The secondary particles may be prepared by a different method than the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to distinguish single particles from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 um to 20 um, 2 um to 17 um, preferably 3 um to 15 um. The secondary particles may have a specific surface area (BET) of 0.05 m$^2$/g to 10 m$^2$/g, preferably 0.1 m$^2$/g to 1 m$^2$/g, and more preferably 0.3 m$^2$/g to 0.8 m$^2$/g.

In additional exemplary embodiments of the present application, the secondary particle is an aggregate of primary particles, and the primary particles have an average particle diameter (D50) of 0.5 um to 3 um. Specifically, the secondary particle may be in the form of aggregation of several hundred primary particles, and the primary particles may have an average particle diameter (D50) of 0.6 um to 2.8 um, 0.8 um to 2.5 um, or 0.8 um to 1.5 um.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode due to cracking of the particles is increased, thereby improving the service life characteristics of the battery.

In an exemplary embodiment of the present application, the average particle diameter (D50) of the single particles is 1 um to 18 um smaller than the average particle diameter (D50) of the secondary particles.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode due to cracking of the particles is increased, so that there is an effect of improving the service life characteristics of the battery and improving the energy density.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode due to particle cracking during the rolling process after manufacturing the electrode is increased may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 parts by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, may be different components, and may mean a form of aggregation of single particle forms.

In an exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

In an exemplary embodiment of the present application, provided is a method for manufacturing a lithium secondary battery, the method including pre-lithiating the negative electrode by introducing an electrolyte solution into the battery pouch.

As described above, the electrolyte solution dissolution layer begins to be dissolved in the electrolyte solution by introducing the electrolyte solution into the battery pouch, and accordingly, pre-lithiation may be performed.

In an exemplary embodiment of the present application, provided is a method for manufacturing a lithium secondary battery, in which the pre-lithiating of the negative electrode by introducing the electrolyte solution into the battery pouch is performed under a pressurized condition of 5 kgf/cm$^2$ to 20 kgf/cm$^2$ under a temperature condition of 60°C to 80°C.

In an exemplary embodiment of the present application, provided is a method for manufacturing a lithium secondary battery, in which the pre-lithiating of the negative electrode by introducing the electrolyte solution into the battery pouch is completed in 6 hours and more and in 24 hours or less.

That is, the pre-lithiation according to the present application is performed in a sealed secondary battery, not in the air simultaneously with manufacturing a negative electrode for a lithium secondary battery and transferring lithium metal, and has a feature capable of suppressing the production of by-products and more uniformly performing pre-lithiation because the pre-lithiation rate is slower than in the air.

In an exemplary embodiment of the present application, provided is a lithium secondary battery manufactured by the method for manufacturing a lithium secondary battery.

In an exemplary embodiment of the present application, the lithium secondary battery may include: a positive electrode for a lithium secondary battery; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 200 for a lithium secondary battery, which includes a negative electrode active material layer 30 on one surface of a negative electrode current collector layer 40 and to confirm a positive electrode 300 for a lithium secondary battery, which includes a positive electrode active material layer 70 on one surface of a positive electrode current collector layer 60, and it is shown that the negative electrode 200 for a lithium secondary battery and the positive electrode 100 for a lithium secondary battery are formed in a structure in which the electrodes are stacked with a separator 50 interposed therebetween.

In this case, the electrolyte solution dissolution layer used during the pre-lithiation may be completely removed by the used electrolyte solution, and accordingly, an unnecessary increase in resistance may be prevented because the electrolyte solution dissolution layer does not remain on the negative electrode.

In an exemplary embodiment of the present application, examples of the electrolyte solution include an organic liquid electrolyte solution, an inorganic liquid electrolyte, a solid polymer electrolyte, a gel-type polymer electrolyte solution, a solid inorganic electrolyte solution, a molten-type inorganic electrolyte solution, and the like, which can be used during the manufacture of a lithium secondary battery, but are not limited thereto.

Specifically, the electrolyte solution may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates such as ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$

, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte solution, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte solution constituent components.

An exemplary embodiment of the present invention provides a battery module including the lithium secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Example 1>**

**Manufacture of negative electrode**

A negative electrode slurry was prepared by adding 81 wt% of Si as a negative electrode active material, 9.1 wt% of Denka Black as a conductive material, 9.3 wt% of SBR as a binder and 0.6 wt% of CMC as a thickener to water.

A negative electrode with both surfaces coated with a negative electrode active material was manufactured by coating both surfaces above a copper current collector (thickness: 15 um) with the negative electrode slurry, drying the coated surfaces in a vacuum oven at 130°C for 12 hours, and performing roll pressing. The negative electrode was wound in the form of a separate roll. On the negative electrode active material layer manufactured by coating, an electrolyte solution dissolution layer with a composition of 15% PVDF-HFP (including 15 parts by weight of a monomer including a fluoro group relative to 100 parts by weight of a binder copolymer) was coated with the binder copolymer to have a thickness of 0.5 um, and dried at 80°C.

A pre-lithiation device was prepared for the negative electrode prepared above. Specifically, after setting the roll press pressure to 100 kgf and setting the roll temperature to 80°C, rolling pressing was performed at a speed of 1 m/min. In this case, roll pressing was performed in the order of PET substrate/Li metal/negative electrode/Li metal/PET substrate, and roll pressing was performed such that the Li metal faces both surfaces of the negative electrode.

Thereafter, the PET substrate was immediately removed.

**Manufacture of lithium secondary battery**

A positive electrode slurry was prepared by adding $LiNi_{0.6}Co_{0.2}Mn_{0.2}O_2$ (average particle diameter (D50) : 15 um) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 um) as a positive electrode current collector were coated with the positive electrode slurry in a loading amount of 537 mg/25 cm$^2$, and the aluminum current collector was roll-pressed and dried in a vacuum oven at 130°C for 10 hours to form a positive electrode active material layer (thickness: 65 um), thereby preparing a positive electrode (thickness of the positive electrode: 77 um, porosity of 26%).

The secondary battery of Example 1 was manufactured by interposing a polyethylene separator between the positive electrode and the negative electrode of Example 1 and injecting an electrolyte thereinto.

**Pre-lithiation of negative electrode**

After the electrolyte solution was injected, pre-lithiation was performed at a dew point dry room at -50°C until all the Li metal disappeared.

**<Example 2>**

A negative electrode was manufactured and a pre-lithiation process was performed in the same manner as in Example 1, except that during the preparation of the electrolyte solution dissolution layer in Example 1, an electrolyte solution dissolution layer with a composition of 8% PVDF-HFP (including 8 parts by weight of a monomer including a fluoro group relative to 100 parts by weight of a binder copolymer) was coated with the binder copolymer to have a thickness of 0.5 um.

**<Example 3>**

A negative electrode was manufactured and a pre-lithiation process was performed in the same manner as in Example 1, except that the electrolyte solution dissolution layer was coated to have a thickness of 0.2 um, in Example 1.

**<Example 4>**

A negative electrode was manufactured and a pre-lithiation process was performed in the same manner as in Example 1, except that during the preparation of the electrolyte solution dissolution layer, an electrolyte solution dissolution layer with a composition of PMMA:8% PVDF-HFP (including 8 parts by weight of a monomer including a fluoro group relative to 100 parts by weight of a binder copolymer) = 15:85 was coated with the binder copolymer to have a thickness of 0.5 um, in Example 1.

**<Example 5>**

A negative electrode was manufactured and a pre-lithiation process was performed in the same manner as in Example 1, except that the electrolyte solution dissolution layer was coated to have a thickness of 2.5 um, in Example 1.

**<Example 6>**

A negative electrode was manufactured and a pre-lithiation process was performed in the same manner as in Example 1, except that the electrolyte solution dissolution layer was coated to have a thickness of 2.5 um, in Example 1.

**<Comparative Example 1>**

A negative electrode was manufactured, and then a pre-lithiation process was performed in the same manner as in Example 1, except that when a negative electrode with no electrolyte solution dissolution layer formed was manufactured and roll-pressed during the manufacture of the negative electrode, the negative electrode was roll-pressed by setting the temperature to room temperature (25°C), in Example 1.

**<Comparative Example 2>**

A pre-lithiation process was performed in the same manner as in Example 1, except that the electrolyte solution dissolution layer was coated to have a thickness of 10 um, in Example 1.

**<Comparative Example 3>**

A negative electrode was manufactured and a pre-lithiation process was performed in the same manner as in Example 1, except that during the preparation of the electrolyte solution dissolution layer, an electrolyte solution dissolution layer with a composition of 30% PVDF-HFP (including 30 parts by weight of a monomer including a fluoro group relative to 100 parts by weight of a binder copolymer) was coated with the binder copolymer to have a thickness of 0.5 um, in Example 1.

**<Comparative Example 4>**

A negative electrode was manufactured and a pre-lithiation process was performed in the same manner as in Example 1, except that during the preparation of the electrolyte solution dissolution layer, an electrolyte solution dissolution layer with a composition of 3% PVDF-HFP (including 3 parts by weight of a monomer including a fluoro group relative to 100 parts by weight of a binder copolymer) was coated with the binder copolymer to have a thickness of 0.5 um, in Example 1.

**<Comparative Example 5>**

A negative electrode was manufactured and a pre-lithiation process was performed in the same manner as in Example 1, except that the electrolyte solution dissolution layer with a PMMA composition was coated to have a thickness of 0.5 um with the binder copolymer during the preparation of the electrolyte solution dissolution layer, in Example 1.

The configuration of the electrolyte solution dissolution layer, the thickness of the electrolyte solution dissolution layer, the rolling pressing temperature, the electrode ICE deviation (%) and the Li metal loss (%) of Examples 1 to 6 and Comparative Examples 1 to 5 are shown in the following Table 1.

[Table 1]

|  | Configuration of electrolyte solution dissolution layer | Thickness ($\mu$m) of electrolyte solution dissolution layer | Roll pressing temperature (°C) | Electrode ICE deviation (%) | Li metal loss (%) |
|---|---|---|---|---|---|
| Example 1 | 15% PVDF-HFP | 0.5 | 80 | 2 | 18 |
| Example 2 | 8% PVDF-HFP | 0.5 | 80 | 2.6 | 20 |
| Example 3 | 15% PVDF-HFP | 0.2 | 80 | 2 | 22 |
| Example 4 | PMMA:8% PVDF-HFP (15:85 ) | 0.5 | 80 | 2.3 | 21 |
| Example 5 | 15% PVDF-HFP | 2.5 | 80 | 2.6 | 25 |
| Example 6 | 8% PVDF-HFP | 2.5 | 80 | 2.8 | 27 |
| Comparative Example 1 | - | 0 | 25 | 3.3 | 30 |
| Comparative Example 2 | 15% PVDF-HFP | 10 | 80 | 3 | 35 |
| Comparative Example 3 | 30% PVDF-HFP | 1 | 80 | 3 | 40 |
| Comparative Example 4 | 3% PVDF-HFP | 0.5 | 80 | 3.1 | 37 |
| Comparative Example 5 | PMMA | 0.5 | 80 | 3 | 38 |

In Table 1, the electrode ICE deviation (%) can be calculated by (initial discharge capacity/initial charge capacity) x 100 (%), and the Li metal loss (%) can be calculated by the value of 1 - (measured initial charge capacity/lithium capacity used during pre-lithiation) x 100 (%).

As can be confirmed in Table 1, the negative electrode for a lithium secondary battery of Examples 1 to 6 includes an electrolyte solution dissolution layer having a thickness of 0.1 um or more and 5 um or less and including a binder copolymer including a monomer including a fluoro group on the negative electrode active material layer, and the monomer is included in an amount of 5 parts by weight or more and 20 parts by weight or less based on 100 parts by weight of the binder copolymer. Even though lithium metal is transferred onto a negative electrode active material layer by including the electrolyte solution dissolution layer as described above, pre-lithiation does not occur, and it could be confirmed that the negative electrode for a lithium secondary battery according to an exemplary embodiment of the present invention has a feature that in a state where an electrolyte solution is injected and sealed after a battery is afterward assembled, the electrolyte solution dissolution layer is dissolved in the electrolyte solution and pre-lithiated.

As the electrolyte solution dissolution layer is dissolved in the electrolyte solution and pre-lithiated, products of side reactions with lithium are reduced compared to the case where both a negative electrode is manufactured and pre-lithiation occurs, so that the loss of lithium metal can be reduced, and the electrolyte solution dissolution layer can also adjust the rate of pre-lithiation, so that it could be confirmed that the negative electrode for a lithium secondary battery according to an exemplary embodiment of the present invention has a feature capable of preventing the loss of lithium and achieving uniform pre-lithiation over the entire negative electrode active material layer.

Specifically, Comparative Example 1 in Table 1 is a case where an electrolyte solution dissolution layer is not included, and it could be confirmed that Li metal was pre-lithiated before the assembly of the lithium secondary battery because there was no medium which delays the reaction on the negative electrode. Accordingly, it could be confirmed that the pre-lithiation rate was fast, the pre-lithiation was performed in the air to generate a lot of heat and form by-products, resulting in a large electrode ICE deviation and a large amount of Li metal lost.

Comparative Example 2 in Table 1 is a case where an electrolyte solution dissolution layer is included, but the thickness thereof exceeds the range of the upper limit (10 um), and it could be confirmed that since the electrolyte solution dissolution layer is too thick, the speed at which the coating layer is dissolved in the electrolyte solution and disappears is remarkably reduced, and during this time, the electrolyte solution dissolution layer is not uniformly pre-lithiated, and lithium metal is rather dissolved in the electrolyte solution, resulting in large electrode ICE deviation and large amount of Li metal lost.

Furthermore, Comparative Example 3 has a composition of 30% PVDF-HFP (including 30 parts by weight of a monomer including a fluoro group relative to 100 parts by weight of a binder copolymer) as the binder copolymer during the preparation of the electrolyte solution dissolution layer, and it could be confirmed that since a large amount of a monomer including a fluoro group is included, the surface of the electrolyte solution dissolution layer was unstable, and the migration rate of lithium deteriorated during pre-lithiation, resulting in a large amount of lithium lost.

Comparative Example 4 has a composition of 3% PVDF-HFP (including 3 parts by weight of a monomer including a fluoro group relative to 100 parts by weight of a binder copolymer) as the binder copolymer during the preparation of the electrolyte solution dissolution layer, and it could be confirmed that since the number of the monomer including a fluoro group was small, the amount of lithium lost was large as in Comparative Example 3.

Finally, Comparative Example 5 in Table 1 includes an acrylic polymer alone, instead of the composition of the electrolytic solution dissolution layer as in the present invention, and it could be confirmed that although the lithium was dissolved when the electrolyte solution was introduced, the lithium was not uniformly dissolved, and thus was not uniformly pre-lithiated as a whole, resulting in a large amount of lithium lost.

For reference, Examples 5 and 6 correspond to cases where the thickness of the electrolyte solution dissolution layer is larger than those of Examples 1 to 4. In the above case, it can be confirmed that the amount of lithium lost is smaller than those of Comparative Examples 1 to 5, but it can be seen that the electrode ICE deviation and the Li metal loss rate are higher than those of Examples 1 to 4. This corresponds to the case in which when the thickness of the electrolytes solution dissolution layer becomes larger, as the rate at which the electrolyte solution dissolution layer is dissolved in the electrolyte solution and disappeared is reduced, the lithium metal is not uniformly pre-lithiated in the negative electrode active material layer during that time, but instead, the lithium metal is dissolved in the electrolyte solution, resulting in an increase in lithium loss. That is, it could be confirmed that the thickness of the electrolyte solution dissolution layer according to the present application is most effective when the thickness is 0.2 um or more and 2 $\mu$m or less.

**Claims**

1. A negative electrode for a lithium secondary battery, comprising:

   a negative electrode current collector layer;
   a negative electrode active material layer on one surface or both surfaces of the negative electrode current collector layer; and
   an electrolyte solution dissolution layer on a surface of the negative electrode active material layer opposite to a surface of the negative electrode active material layer facing the negative electrode current collector layer,
   wherein the electrolyte solution dissolution layer has a thickness of 0.1 um or more and 5 $\mu$m or less, and
   wherein the electrolyte solution dissolution layer comprises a binder copolymer comprising a monomer unit comprising a fluoro group, and wherein the monomer unit is present in an amount of 5 parts by weight or more and 20 parts by weight or less based on 100 parts by weight of the binder copolymer.

2. The negative electrode of claim 1, wherein the monomer unit comprises a perfluoro olefin.

3. The negative electrode of claim 1, wherein the electrolyte solution dissolution layer further comprises an acrylic polymer, and wherein the binder copolymer is present in an amount of 1 part by weight or more and 20 parts by weight or less based on 100 parts by weight of the electrolyte solution dissolution layer.

4. The negative electrode of claim 1, wherein the negative electrode active material layer comprises: a silicon-containing active material; a negative electrode conductive material; and a negative electrode binder, and
   the silicon-containing active material comprises one or more selected from the group consisting of SiOx, wherein x=0, SiOx, wherein 0<x<2, SiC, a metal impurity, and a Si alloy.

5. The negative electrode of claim 4, wherein the silicon-containing active material comprises one or more selected from the group consisting of SiOx, wherein x=0, and SiOx, wherein 0<x<2, and comprises 70 parts by weight or more of the SiOx, wherein x=0, based on 100 parts by weight of the silicon-containing active material.

6. The negative electrode of claim 1, wherein the negative electrode current collector layer has a thickness of 1 um or more and 100 $\mu$m or less, and
   wherein the negative electrode active material layer has a thickness of 20 $\mu$m or more and 500 $\mu$m or less.

7. A method for manufacturing a lithium secondary battery, the method comprising:

   forming a negative electrode current collector layer and a negative electrode active material layer on one surface or both surfaces of the negative electrode current collector layer;
   forming an electrolyte solution dissolution layer by coating a surface of the negative electrode active material layer opposite to a surface of the negative electrode active material layer facing the negative electrode current collector layer with an electrolyte solution dissolution layer composition to form a negative electrode for the lithium secondary battery;
   transferring lithium metal to a surface of the electrolyte solution dissolution layer opposite to a surface of the electrolyte solution dissolution layer facing the negative electrode active material layer;
   forming a positive electrode current collector layer and a positive electrode active material layer on one surface or both surfaces of the positive electrode current collector layer to form a positive electrode for a lithium secondary battery;
   laminating a separator between the negative electrode and the positive electrode and placing the resulting laminate in a battery pouch; and
   pre-lithiating the negative electrode by introducing an electrolyte solution into the battery pouch.

8. The method of claim 7, wherein the pre-lithiating of the negative electrode by introducing the electrolyte solution into the battery pouch is performed under a pressurized condition of 5 kgf/cm$^2$ to 20 kgf/cm$^2$ under a temperature condition of 60°C to 80°C.

9. The method of claim 7, wherein the pre-lithiating of the negative electrode by introducing the electrolyte solution into the battery pouch is completed in 6 hours and more and in 24 hours or less.

10. The method of claim 7, wherein the transferring of the lithium metal to the surface of the electrolyte solution dissolution layer opposite to the surface of the electrolyte solution dissolution layer facing the negative electrode active material layer comprises preparing a transfer laminate comprising a substrate layer and lithium metal provided on the substrate layer;

    laminating the transfer laminate on the electrolyte solution dissolution layer wherein a surface opposite to a surface of the lithium metal facing the substrate layer faces a surface opposite to a surface of the electrolyte solution dissolution layer facing the negative electrode active material layer; and
    removing the substrate layer.

11. The method of claim 10, wherein a release layer is formed on the surface of the substrate layer which is in contact with the lithium metal of the transfer laminate.

12. The method of claim 7, wherein the lithium metal has a thickness of 1 um or more and 10 um or less.

13. A lithium secondary battery manufactured by the method according to any one of claims 7 to 12.

[Figure 1]

[Figure 2]

| | | |
|---|---|---|
| **INTERNATIONAL SEARCH REPORT** | International application No. | |
| | **PCT/KR2022/018510** | |

**A. CLASSIFICATION OF SUBJECT MATTER**

**H01M 4/13**(2010.01)i; **H01M 4/131**(2010.01)i; **H01M 4/134**(2010.01)i; **H01M 4/62**(2006.01)i; **H01M 10/42**(2006.01)i; **H01M 4/139**(2010.01)i; **H01M 4/04**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/13(2010.01); H01M 10/36(2006.01); H01M 4/131(2010.01); H01M 4/133(2010.01); H01M 4/48(2010.01); H01M 4/62(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 전해액 (electrolyte), 용해 (soluble, dissolve), 전리튬화 (prelithiation), 불소 (fluorine), 단량체 (monomer)

**C. DOCUMENTS CONSIDERED TO BE RELEVANT**

| Category* | Citation of document, with indication, where appropriate, of the relevant passages | Relevant to claim No. |
|---|---|---|
| X | JP 2019-192642 A (MURATA MFG CO., LTD.) 31 October 2019 (2019-10-31)<br>  See claims 1, 2 and 8; paragraphs [0025], [0026], [0035], [0043], [0044] and [0090]-[0096]; and figures 1-5. | 7,9,12,13 |
| Y | | 8,10,11 |
| A | | 1-6 |
| Y | JP 2007-305596 A (UBE IND. LTD.) 22 November 2007 (2007-11-22)<br>  See paragraphs [0032] and [0033]. | 8,10,11 |
| A | CN 109546150 A (CONTEMPORARY AMPEREX TECHNOLOGY CO., LIMITED.) 29 March 2019 (2019-03-29)<br>  See entire document. | 1-13 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 March 2023** | **17 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 333 101 A1

**INTERNATIONAL SEARCH REPORT**

| International application No. |
| --- |
| **PCT/KR2022/018510** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0137291 A (RESEARCH INSTITUTE OF INDUSTRIAL SCIENCE & TECHNOLOGY) 17 November 2021 (2021-11-17) <br> See entire document. | 1-13 |
| A | KR 10-2021-0080030 A (POSCO et al.) 30 June 2021 (2021-06-30) <br> See entire document. | 1-13 |

Form PCT/ISA/210 (second sheet) (July 2022)

**INTERNATIONAL SEARCH REPORT**

| International application No. |
|---|
| **PCT/KR2022/018510** |

**Box No. III       Observations where unity of invention is lacking (Continuation of item 3 of first sheet)**

This International Searching Authority found multiple inventions in this international application, as follows:

The invention of group 1: claims 1-6 pertain to an anode for a lithium secondary battery, comprising an anode current collector layer, an anode active material layer and an electrolyte dissolution layer comprising a binder copolymer comprising monomers including a fluoro group,

The invention of group 2: claims 7-13 pertain to a method for preparing a lithium secondary battery, comprising the steps of: forming an anode current collector layer and an anode active material layer on one surface or both surfaces of the anode current collector layer; forming an anode for a lithium secondary battery, comprising an electrolyte dissolution layer by coating, with an electrolyte dissolution layer composition, the surface opposite to a surface of the anode active material layer, coming in contact with the anode current collector layer; transferring a lithium metal onto the opposite surface of a surface of the electrolyte dissolution layer, coming in contact with the anode active material layer; forming a cathode for a lithium secondary battery by forming a cathode current collector layer and a cathode active material on one surface and both surfaces of the cathode current collector layer; performing lamination by including a separator between the anode and the cathode, and including same in a battery pouch; and prelithiating the anode by injecting an electrolyte into the battery pouch.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (July 2022)

INTERNATIONAL SEARCH REPORT
Information on patent family members

International application No.

**PCT/KR2022/018510**

| Patent document cited in search report | | | Publication date (day/month/year) | Patent family member(s) | | | Publication date (day/month/year) |
|---|---|---|---|---|---|---|---|
| JP | 2019-192642 | A | 31 October 2019 | CN | 110416493 | A | 05 November 2019 |
| | | | | JP | 6900970 | B2 | 14 July 2021 |
| | | | | US | 2019-0334165 | A1 | 31 October 2019 |
| JP | 2007-305596 | A | 22 November 2007 | AU | 4845596 | A | 23 September 1996 |
| | | | | CA | 2210459 | A1 | 12 September 1996 |
| | | | | CN | 1169250 | C | 29 September 2004 |
| | | | | CN | 1177417 | A | 25 March 1998 |
| | | | | DE | 69636385 | T2 | 27 September 2007 |
| | | | | DE | 69637513 | T2 | 04 June 2009 |
| | | | | EP | 0817294 | A1 | 07 January 1998 |
| | | | | EP | 0817294 | B1 | 26 July 2006 |
| | | | | EP | 1679756 | A1 | 12 July 2006 |
| | | | | EP | 1679756 | B1 | 30 April 2008 |
| | | | | JP | 4016427 | B2 | 05 December 2007 |
| | | | | JP | 4893495 | B2 | 07 March 2012 |
| | | | | KR | 10-1998-0702606 | A | 05 August 1998 |
| | | | | WO | 96-27910 | A1 | 12 September 1996 |
| CN | 109546150 | A | 29 March 2019 | CN | 109546150 | B | 21 September 2021 |
| KR | 10-2021-0137291 | A | 17 November 2021 | | None | | |
| KR | 10-2021-0080030 | A | 30 June 2021 | KR | 10-2406390 | B1 | 07 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210167502

- JP 2009080971 A